# EUROPEAN PATENT SPECIFICATION

(11) **EP 0 393 873 B1**
(45) Date of publication and mention of the grant of the patent: **07.06.1995**
(21) Application number: 90303517.8
(22) Date of filing: 02.04.1990
(51) Int. Cl.: B60C 11/11

(54) **A vehicle tyre**
Reifen für Fahrzeuge
Pneumatique pour véhicules

(30) Priority: 21.04.1989 DE 3913199
(43) Date of publication of application: 24.10.1990
(73) Proprietor: SP REIFENWERKE GMBH, 63450 Hanau (DE)
(72) Inventor: Sponagel, Peter, D-6200 Wiesbaden (DE)
(74) Representative: Stewart, Charles Geoffrey

(56) References cited:
- FR-A- 816 757
- FR-A- 1 580 205
- US-A- 2 240 542
- US-A- 3 739 828
- PATENT ABSTRACTS OF JAPAN vol. 10, no. 342 (M-536)(2398) 19 November 1986,& JP-A-61 143206 (YOKOHAMA RUBBER COMPANY LTD) 30 June 1986,

## Description

The invention relates to a vehicle tyre with a tread surface formed by ribs, blocks or pads and also substantially U- or V-shaped cross sectional profile tread grooves arranged therebetween.

With regard to the desired and achievable performance characteristics of a vehicle tyre, the configuration of tread surfaces of vehicle tyres is of very great significance. It is particularly difficult to meet in an optimum manner the great number of requirements, which are at least partially contradictory, and in particular to be able to take account of the specific requirements arising both in summer and in winter operation.

The problem underlying the invention is therefore to construct a vehicle tyre having a special tread configuration so that the greatest possible number of requirements including requirements which are at least partly contradictory, can be fulfilled, and in particular so that the traction and wear behaviour are improved.

A tyre with a tread surface formed by circumferential ribs wherein at least part of the ribs is provided with substantially transverse slits and wherein the tread surface region between two sequential slits has a chamfered shape is known for example from Patent Publication US-A-2240542.

Accordingly the invention resides in providing a vehicle tyre wherein at least a part of the ribs, blocks or pads is provided with knife cuts which are substantially transverse to or at least at an angle to the circumferential direction of the tyre characterised in that the tread surface region between two sequential knife cuts has a chamfered shape extending over part of the width of the tread surface region in the circumferential direction of the tyre leaving free an edge of the lamella formed by the knife cut, adjacent to the trailing or leading knife cut.

In this manner the individual blocks or pads are loosened and they are provided with effective grip edges which by their adaptability to the particular structure of the road surface contribute substantially to improving the characteristics of the tyre.

Further aspects will become apparent from the following description in conjunction with the attached drawings in which:
Figure 1 is a schematic illustration of a prior art profile for the surface of a tread block or pad; and
Figure 2 is a schematic illustration of a profile for the surface of a tread block or pad according to the present invention.

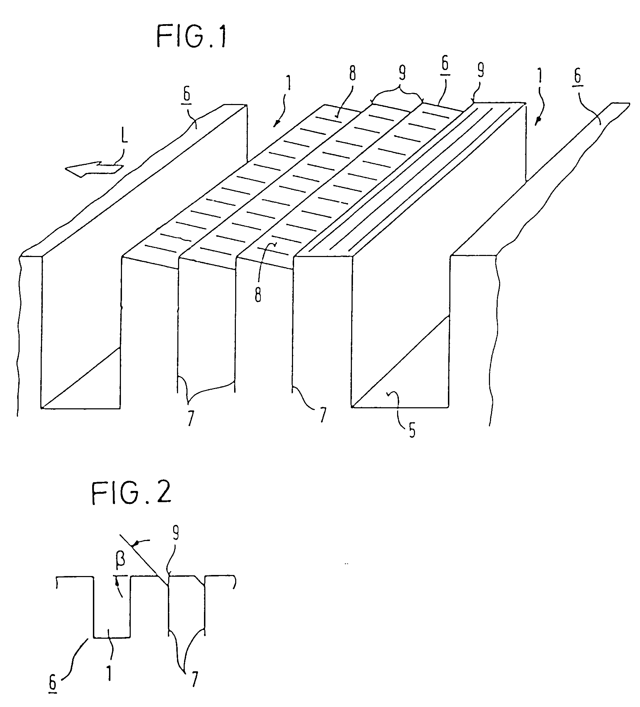

Figure 1 shows schematically a prior art block or pad 6 having a tread surface profile which is divided or broken up by a plurality of fine knife cuts 7 and the surface of which is specially made to increase adhesion or traction.

The tread surface regions 8 each disposed between two knife cuts 7 following each other in the tyre running direction L have the form of surfaces rising in the running direction L so that the entire surface of the particular block or pad 6 represents a stepped surface having projecting lamella edges 9 extending parallel to each other.

In Figure 2 an embodiment according to the present invention is illustrated which shows that the chamfer forming the lamella edges 9 does not extend over the entire width of the subblock. The chamfer extends at an angle β of 30 to 60° only in the region adjacent the lamella edge 9 of the next subblock.

The inclined surfaces provided to form the lamella edges 9 may be made, as illustrated, substantially planar but it is alternatively possible to provide curved surfaces, provided that a pronounced depression results in the region of the transition from one subblock to the other subblock, said depression allowing the following subblock to act in the form of a lamella edge 9.

## Claims

1. A vehicle tyre wherein at least a part of the ribs, blocks or pads (6) is provided with knife cuts (7) which are substantially transverse to or at least at an angle to the circumferential direction of the tyre characterised in that the tread surface region (8) between two sequential knife cuts (7) has a chamfered shape extending over part of the width of the tread surface region (8) in the circumferential direction of the tyre leaving free an edge (9) of the lamella formed by the knife cut (7), adjacent to the trailing or leading knife cut (7).

2. A vehicle tyre in accordance with claim 1 characterised in that the surface region disposed between two sequential knife cuts (7) is chamfered only adjacent the trailing knife cut (7).

3. A vehicle tyre in accordance with claim 1 characterised in that the angle of inclination (β) of the chamfered surface is 30° to 60°.

## Patentansprüche

1. Ein Fahrzeugreifen, worin zumindest ein Teil der Rippen, Blöcke oder Kissen (6) mit Lamellenschlitzen (7) versehen ist, welche im wesentlichen quer zu oder zumindest in einem Winkel zu der Umfangsrichtung des Reifens liegen,
dadurch **gekennzeichnet,**
daß der Laufflächenoberflächenbereich (8) zwischen zwei sequentiellen Lamellenschlitzen (7) eine abgeschrägte Gestalt aufweist, die sicher über einen Teil der Breite des Laufflächenbereichs (8) in der Umfangsrichtung des Reifens erstreckt, wobei ein Rand (9) der Lamellen, die durch den Lamellenschlitz (7) gebildet sind, benachbart dem nachfolgenden oder führenden Lamellenschlitz (7) freigelassen wird.

2. Ein Fahrzeugreifen nach Anspruch 1,
dadurch **gekennzeichnet,**
daß der Oberflächenbereich, der zwischen zwei sequentiellen Lamellenschlitzen (7) angeordnet ist, nur benachbart dem nachfolgenden Lamellenschlitz (7) abgeschrägt ist.

3. Ein Fahrzeugreifen nach Anspruch 1,
dadurch **gekennzeichnet,**
daß der Neigungswinkel (β) der abgeschrägten Oberfläche 30 bis 60° beträgt.

## Revendications

1. Pneumatique pour véhicule, dans lequel une partie au moins des nervures, blocs ou pavés (6) comporte des découpes (7) de couteau qui sont pratiquement transversales à la direction circonférentielle du pneumatique ou au moins inclinées par rapport à elle, caractérisé en ce que la région (8) de surface de bande de roulement comprise entre deux découpes successives (7) de couteau a une forme chanfreinée sur une partie de la largeur de la région (8) de surface de bande de roulement dans la direction circonférentielle du pneumatique, laissant un bord libre (9) de la lamelle formée par la découpe (7) de couteau près de la découpe avant ou arrière (7) de couteau.

2. Pneumatique pour véhicule selon la revendication 1, caractérisé en ce que la région de la surface disposée entre deux découpes successives (7) de couteau n'est chanfreinée que près de la découpe arrière (7) de couteau.

3. Pneumatique pour véhicule selon la revendication 1, caractérisé en ce que l'angle d'inclinaison (β) de la surface chanfreinée est compris entre 30° et 60°.
